# EUROPEAN PATENT APPLICATION

(11) **EP 1 724 620 A1**
(43) Date of publication of application: **22.11.2006**
(21) Application number: 06252573.8
(22) Date of filing: 17.05.2006
(51) Int. Cl.: G02B 5/30, G02F 1/1335

(54) **Optical element and projection type image display apparatus having optical element therein**

(30) Priority: 18.05.2005 JP 2005145150
(71) Applicant: Hitachi, Ltd., Tokyo 100-8280 (JP)
(72) Inventor: Yoshida, Hironori, c/o Hitachi, Ltd., Intell. Prop, 1-chome Chiyoda-ku, Tokyo 100-8220 (JP); Hirata, Koji, c/o Hitachi, Ltd., Intell. Prop. Gr, 1-chome Chiyoda-ku, Tokyo 100-8220 (JP); Abe, Fukuyasu, c/o Hitachi, Ltd., Intell. Prop. Gr, 1-chome Chiyoda-ku, Tokyo 100-8220 (JP)
(74) Representative: Calderbank, Thomas Roger

(57) **Abstract**

In a projection type image display apparatus, it is intended to reliably facilitate assembly of optical members for polarization treatment and phase difference compensation of light. The optical members are each configured such that a protective layer such as a magnesium fluoride layer or an aluminum oxide layer is formed by vapor deposition over a light permeable substrate of cubic system structure comprising, for example, magnesium oxide and an adhesive layer is provided on the protective layer for fixing the element layers of a polarization element, a view angle compensation element, etc.

## Description

The present invention relates to a projection type image display apparatus such as a liquid crystal projector and a projection type rear projection television set. In addition, the invention relates to a constitution of an optical member disposed in an image display element on the light incident side or light emission side thereof so as to execute polarization treatment and optical phase difference compensation.

The conventional technology concerned with the invention includes those, for example, described in Japanese Patent Laid-open No. 11-337919. This patent document discloses a projection type image display apparatus configured as below. At least one of a holding plate of a polarization element in a polarization plate, a substrate of a liquid crystal display element, etc. is formed of sapphire in order to avoid an increase in the temperature of the polarization element and the liquid crystal display element.

In the conventional technology mentioned above, since sapphire has crystallographic axis, birefringence of light tends to occur and the image contrast tends to be lowered. Accordingly, when the element is assembled, it is necessary to adjustably align the position and angle of the element to the direction of the crystallographic axis of sapphire. Further, sapphire increases the cost.

It is desirable for of the present invention to provide an optical element for executing a polarization treatment and light phase difference compensation in a projection type image display apparatus which is easy to be assembled and does not cause birefringence of light etc. Further, it is also desirable to ensure heat dissipation with good efficiency and enable to suppress an increase in temperature. Furthermore, it is preferable to suppress degradation of the optical member even under a high-temperature and humidity circumstance for ensuring predetermined optical performance.

Accordingly, the present invention may provide an optical member for polarization treatment or compensation for light phase difference that is disposed on one or both of light incident side and emission side of an image display element used for a projection type image display apparatus, and that is configured such that a protective layer such as a magnesium fluoride layer or an aluminum oxide layer is formed on a light transmitting substrate of a cubic system structure such as magnesium oxide, and an adhesive layer is formed on the protective layer to fix the element layer for the polarization element or the view angle compensation element.

In the drawings
Fig. 1 is a diagram illustrating the constitution of a polarization plate by way of example;
Fig. 2 is a diagram illustrating the arrangement of the polarization plate by way of example;
Fig. 3 is a schematic of a projection type image display apparatus by way of example;
Fig. 4 is a diagram illustrating the constitution of the polarization plate by way of another example;
Fig. 5 is a diagram illustrating the arrangement of a polarization plate and a view angle compensation plate by way of example;
Fig. 6 is a schematic of a projection type image display apparatus by way of another example.
Fig. 7 is a diagram illustrating the constitution of an optical member by way of example;
Fig. 8 is a diagram illustrating the arrangement of a polarization plate and an optical member by way of example; and
Fig. 9 is a schematic of a projection type image display apparatus by way of another example.

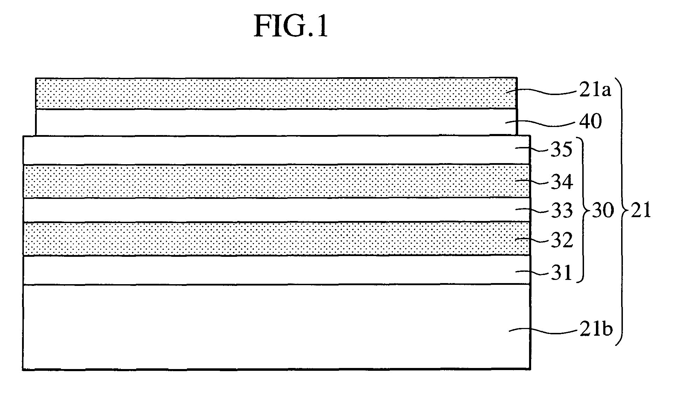

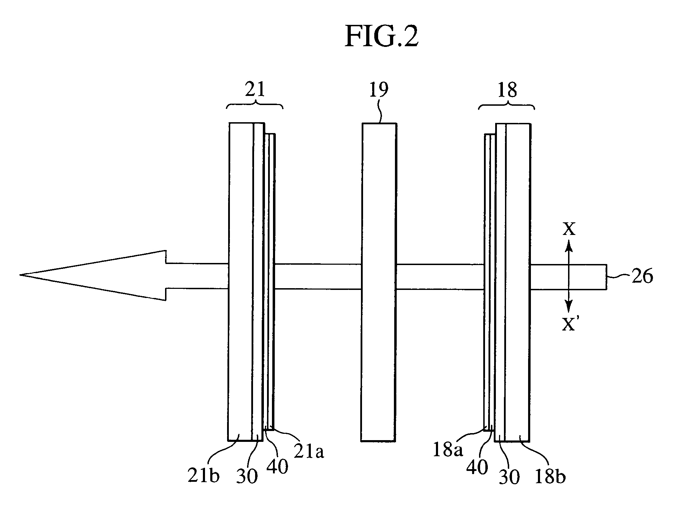

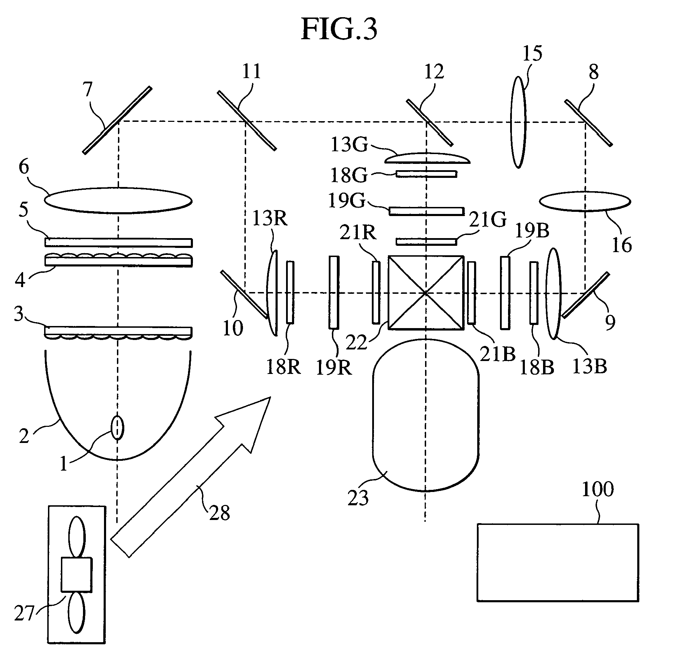

Figs. 1 to 3 are explanatory diagrams of a first embodiment. The first embodiment shows a case in which an optical member is a polarization plate. Fig. 1 is a diagram illustrating the constitution of a polarization plate by way of example, Fig. 2 is a diagram illustrating the arrangement of the polarization plate constituted as in Fig. 1 with respect to an image display element, and Fig. 3 is a schematic of a projection type image display apparatus using the constitution of the arrangement of Fig. 2 by way of example.

In Fig 1, reference numeral 21 denotes a polarization plate as an optical member, 21b denotes a magnesium oxide substrate as a light permeable substrate of a cubic system structure, and 30 denotes a protective layer formed of an inorganic material. Reference numerals 31 and 33 each denote a layer of vapor deposition film of aluminum oxide as an inorganic material forming the protective layer 30 (hereinafter referred to as an aluminum oxide layer). Reference numerals 32 and 34 each denote a layer of vapor deposition film of magnesium fluoride (hereinafter referred as magnesium fluoride layer) as inorganic material also forming the protective layer 30. Reference numeral 35 denotes a layer of insulative film (hereinafter referred to as insulator layer) also as a portion of the protective layer 30. Reference numeral 40 denotes an adhesive layer formed of an adhesive material such as an acrylic acid ester. Reference numeral 21a denotes an element layer forming a polarization element (hereinafter referred to as a polarization element layer) for forming the polarization element for executing a polarization treatment on incident light.

In the polarization plate 21, the aluminum oxide layer 31, the magnesium fluoride layer 32, the aluminum oxide layer 33, and the magnesium fluoride layer 34 are each formed by vapor deposition on the magnesium oxide substrate 21b. Further, the adhesive layer 40 is disposed by way of the insulator layer 35, and the polarization element layer 21a is fixed by the adhesive layer 40 by way of the protective layer 30 on the side of the magnesium oxide substrate 21b. In the protective layer 30, the aluminum oxide layer 31 is provided to mainly protect the magnesium oxide substrate 21b. Further, the magnesium fluoride layers 32 and 34 are provided to mainly prevent intrusion of water content from the outside. Further, the aluminum oxide layer 33 is provided to mainly protect the magnesium fluoride layer 32. Further, the insulator layer 35 comprises, for example, silicon dioxide and is provided to suppress the effect of the adhesive layer 40 on the magnesium fluoride layer 34 and to prevent intrusion of water content from the outside.

In the constitution described above, in a case of using the polarization plate 21, for example, under a high-temperature and humidity circumstance and an acid is generated by hydrolysis reaction in the adhesive layer 40, intrusion of the acid to the magnesium oxide substrate 21b is inhibited by the protective layer 30, particularly, by the magnesium fluoride layers 32 and 34 and, as a result, corrosion, clouding, etc. of the magnesium oxide substrate 21b by the acid can be prevented.

In the constitution of Fig. 1, while the protective layer 30 has a constitution comprising dual aluminum layers 31 and 33 and dual magnesium fluoride layers 32 and 34, it may also have a constitution comprising a single aluminum oxide layer 31 and a single magnesium fluoride layer 32. Further, it may have a constitution comprising three or more aluminum oxide layers and three or more magnesium fluoride layers. Further, a constitution may be applicable in which the protective layer and the polarization element layer are stacked on both surfaces of a light permeable substrate of the cubic system structure such as of the magnesium oxide substrate 21b. The number of the aluminum oxide layers may be different from that of the magnesium fluoride layers. Further, the inorganic material used for the protective layer 30 may be made of other materials than aluminum oxide or magnesium fluoride so long as a function and effects substantially equal with or more than those of aluminum oxide or magnesium fluoride can be obtained. For example, cerium fluoride can be used as a substitute for aluminum oxide. Furthermore, also for the magnesium oxide substrate 21b, any light permeable substrate of the cubic system structure can be used instead of the magnesium oxide substrate 21b so long as it has heat conductivity substantially equal to or more than that of magnesium oxide and the function and effect thereof are substantially equal with or more than those of magnesium oxide.

Fig. 2 is a diagram illustrating the arrangement of the polarization plate shown in Fig. 1 by way of example. In Fig. 2, are shown an image display element 19 such as a liquid crystal panel or the like, a polarization plate 18 located on the light incident side of the image display element 19 (hereinafter referred to as an incident side polarization plate), a polarization plate 21 located on the light emission side of the image display element 19 (hereinafter referred to as an emission side polarization plate). The polarization plate described in Fig. 1 is used for both of the incident side polarization plate 18 and the emission side polarization plate 21. That is, in the incident side polarization plate 18, are shown a polarization element layer 18a, a magnesium oxide substrate 18b as a light permeable substrate of the cubic system structure, a protective layer 30 formed of an aluminum oxide layer 31 (Fig. 1), a magnesium fluoride layer 32 (Fig. 1), an aluminum oxide layer (Fig. 1), a magnesium fluoride layer 34 (Fig. 1) and an insulator layer 35 (Fig. 1), an adhesive layer 40 for fixing the polarization element layer 18a by way of the protective layer 30 to the side of the magnesium oxide substrate 18b. Further, in the emission side polarization plate 21, are shown a polarization element layer 21a, a magnesium oxide substrate 21b as a light permeable substrate of the cubic system structure, a protective layer 30, and an adhesive layer 40 for fixing the polarization element layer 21a by way of the protective layer 30 to the side of the magnesium oxide substrate 21b. Reference numeral 26 denotes incident light of red (R), green (G), or blue (B) light subjected to polarizing conversion and color separation (hereinafter referred to as incident polarization light) and X-X' denotes the direction of polarization of linear polarization for the incident polarization light 26. In this example of the arrangement, the incident side polarization plate 18 and the emission side polarization plate 21 are configured such that the polarization element layers 18a and 21a are located nearer the image display element 19 than the magnesium oxide substrate 18b and 21b, respectively. The polarization element layer 18a and the polarization element layer 21a are offset by about 90° from each other in view of the light transmission axis in which the polarization element layer 18a has a transmission axis in the X-X' direction whereas the polarization element layer 21a has a transmission axis in the direction perpendicular to the X-X' direction. Further, the incident side polarization plate 18, the image display element 19, and the emission side polarization plate 21 are spaced apart a predetermined gap from each other.

In the constitution described above, the incident polarization light of the P polarization light or S polarization light of the color light transmits through the magnesium oxide substrate 18b, the protective layer 30, and the adhesive layer 40 of the incident side polarization plate 18 and enters the polarization element layer 18a. The polarization element layer 18a permits, among the polarization light, a component in the polarization direction parallel with the transmission axis of the polarization element layer 18a, that is, the component in the X-X' direction of the polarization light to pass therethrough. The polarization light not transmitting the polarization element layer 18a is absorbed and converted into heat in the incident side polarization plate 18 including the polarization element layer 18a. The polarization light after transmitting the polarization element layer 18a is directed to the image display element 19. In the image display element 19, the directed polarization light is modulated based on the gradation of the image signal. The modulated polarization light of the color light is directed to the polarization element layer 21a of the emission side polarization plate 21. The polarization element layer 21a permits, among the directed polarization light, the component in the polarization direction parallel with transmission axis of the polarization element layer 21a, that is, the component in the direction perpendicular to the X-X' direction to transmit therethrough. The polarization light not transmitting the polarization element layer 21a is absorbed and covered into heat in the incident side polarization plate 21 including the polarization element layer 21a. The polarization light after transmitting the polarization element layer 21a further transmits the adhesive layer 40, the protective layer 30, and the magnesium oxide substrate layer 21b and then emitted to the next optical system.

Since the magnesium oxide substrate 18b and 21b have the cubic system structure, they cause neither birefringence nor change of linear polarization to elliptic polarization. Accordingly, the polarization element layers 18a and 21a cause less light absorption or loss to provide bright high contrast image. Further, since the magnesium oxide substrates 18b and 21b are of the cubic system structure, they have no directionality also relative to the direction of the transmission axis (absorption axis) of each of the polarization element layers 18a and 21a and, accordingly, operation for the alignment of the direction relative to the transmission axis (absorption axis) of the polarization element layers 18a and 21a is not necessary upon assembling as the polarization plate. Further, because of high heat conductivity, the magnesium oxide substrates 18b and 21b dissipate heat in the incident side polarization plate 18 and in the emission side polarization plate 21, suppressing an increase in temperature. Further, since the magnesium oxide substrates 18b and 21b are of the cubic system structure, they are fabricated more easily than the sapphire substrate or the like, thereby reducing costs. Further, since the incident side polarization plate 18 and the emission side polarization element 21 are each provided with the protective layer 30, even in a case where an acid should be generated by hydrolysis reaction in each of the adhesive layers 40 under high-temperature and humidity circumstance or the like, intrusion of the acid to the magnesium oxide substrates 18b and 21b is inhibited by the protective layer 30. Thus, acid corrosion of the magnesium oxide substrates 18b and 21b and degradation of the optical members such as clouding caused thereby can be prevented. This can improve the reliability and increase the working life of the optical member, enabling image display with high quality.

In Fig. 2, a substrate other than the magnesium oxide substrate may also be used for one or both of the incident side polarization plate 18 and the emission side polarization plate 21, so long as the substrate has light permeability due to cubic system structure and has a heat conductivity substantially equal with or superior to that of the magnesium oxide. Further, a constitution may be applicable in which one of the incident polarization plate 18 and the emission side polarization plate 21 does not use a light permeable substrate of the cubic system structure such as magnesium oxide.

Fig. 3 is a diagram of the constitution of a protection type image display apparatus using the arrangement shown in Fig. 2 by way of example. In Fig. 3 are shown a light source 1 such as a lamp, a reflector 2, a first array lens 3 comprising a plurality of lens cells and forming a plurality of secondary light source images, and a second array lens 4 also comprising a plurality of lens cells for focusing individual lens images of the first array lens 3. In addition, reference numeral 5 denotes a polarization conversion element comprising a polarization beam splitter (not shown) and a 1/2 wavelength phase difference plate (not shown), separating light from the side of the second array lens 4 into a P polarization light and an S polarization light, then rotating one of the polarization direction of both of the polarization light to align them to the P or S polarization light and emitting the polarized light. Reference numeral 6 denotes a condensing lens, and 7, 8, and 9 denote a reflection mirror 7. In addition, shown are dichroic mirrors 11 and 12 as a color separator for color separation of the incident light into color light of red, green, and blue (hereinafter referred to as R light, G light, and B light, respectively), condenser lenses 13R, 13G, and 13B, relay lenses 15 and 16. Additionally, shown are image display elements 19R, 19G, and 19B such as transmission type liquid crystal panels for R light, G light, and B light respectively, incident side polarization plates 18R, 18G, and 18B for the image display elements 19R, 19G, and 19B respectively, emission side polarization plates 21R, 21G, and 21B for the image display element 19R, 19G, and 19B respectively, and a dichroic prism 22 as a light synthesizer for color synthesis. Further, shown are a projection lens unit 23 for projecting under magnification image light, a driving circuit 100 for driving the image display elements 19R, 19G, and 19B based on the image signal, a cooling blower 27, and a cooling air flow channel 28. The polarization plate shown in Fig. 1 is used for the incident side polarization plates 18R, 18G, and 18B, and the emission side polarization plate 21R, 21G, and 21B.

The image display elements 19R, 19G, and 19B are each driven by the driving circuit 100 based on the image signal and modulate and emit the incident polarization light based on the gradation of the image signal. The relay lens 15 and 16 function to compensate for the optical channel length from the light source 1 to the image display element 19B which is otherwise longer compared with those of the image display elements 19R and 19G. Constituent elements including from the light source 1 to the projection lens unit 23 constitute an optical unit in the projection type image display apparatus.

In the constitution described above, light (white light) emitted from the light source 1 (also including reflection light at the reflector 2) form a plurality of secondary light source images at the first array lens 3, which are focused into a plurality of secondary light source images at the second array lens 4. The focused light is separated in the polarization conversion element 5 by a polarization beam splitter (not illustrated) into P polarization light and S polarization light. For example, the P polarization light is rotated in the polarization direction into the S polarization light by a 1/2 wavelength phase difference plate (not illustrated), which is combined with the S polarization light separated in the polarization beam splitter, and the combined light is directed to the condensing lens 6. The S polarization light of the white light condensed in the condensing lens 6 is reflected by the reflection mirror 7 to change the direction of the optical channel and is directed to the dichroic mirror 11 at an incident angle of about 45°. In the dichroic mirror 11, the S polarized light of the R light is reflected, while the S polarized light of G light and B light is transmitted.

The S polarized light of the reflected R light is reflected on the reflection mirror 10 to change its direction of the optical channel and is directed by way of the condenser lens 13R to the incident side polarization plate 18R of the image display element 19R of the R light. The S polarization light of the R light is aligned in polarization direction by transmission of the component of the direction of the transmission axis of the incident side polarization plate 18R, and directed to the image display element 19R for the R light. In the image display element 19R, the S polarization light of the R light is modulated during transmission based on the image signal, and emitted as light forming the optical image for the P polarization light of the R light (optical image light). The P polarization light of the R light emitted from the image display element 19R (optical image light) is directed to the emission side polarization plate 21R and aligned in polarization direction by transmission of the component in the direction of the transmission axis of the emission side polarization plate 21R in the emission side polarization plate 21R, and is directed to the dichroic prism 22. In the dichroic mirror 22, it is reflected by the dichroic surface and enters the projection lens unit 23.

On the other hand, the S polarization light of the G light and the B light transmitting the dichroic mirror 11 is further directed to the dichroic mirror 12 at an incident angle of about 45°, in which the S polarization light of the G light is reflected thereby and the S polarization light of the B light is transmitted therethrough. The reflected S polarization light of the G light is directed by way of the condenser lens 13G to the incident side polarization plate 18G of the image display element 19B for the B light.

The S polarization light of the G light is aligned in polarization direction by the transmission of the component in the direction of the transmission axis of the incident side polarization light 18G in the polarization plate 18G, and directed to the image display element 19G for the G light. In the image display element 19G, the S polarization light of the G light is modulated during transmission based on the image signal and emitted as light forming the optical image of the P polarization light of the G light (optical image light). The P polarization light of the G light emitted from the image display element 19G is directed to the emission side polarization plate 21G and aligned in polarization light through transmission of the component in the direction of the transmission axis of the emission side polarization plate 21G and is directed to the dichroic prism 22. In the dichroic prism 22, the P polarization light of the G light is reflected by the dichroic surface and enters the projection lens unit 23.

Further, the S polarization light of the B light transmitting the dichroic mirror 12 is sent by way of the relay lens 15 and reflected by the reflection mirror 8 and, further passed the relay lens and reflected on the reflection mirror 9 and is directed by way of the condenser lens 13B to the incident side polarization plate 18B of the image display element 19B for the B light.

The S polarization light of the B light is aligned in polarization direction by the transmission of the component in the direction of the transmission axis of the incident side polarization light plate 18B, and directed to the image display element 19B for the B light. In the image display element 19B, the S polarization light of the B light is modulated during transmission based on the image signal and emitted as light forming the optical image of the P polarization light of the B light (optical image light). The P polarization light of the B light emitted from the image display element 19B is directed to the emission side polarization plate 21B and aligned in polarization light by transmission of the component in the direction of the transmission axis of the emission side polarization plate 21B in the emission side polarization plate and is directed to the dichroic prism 22. In the dichroic prism 22, the P polarization light of the B light is reflected on the dichroic surface and enters the projection lens unit 23.

As described above, the P polarization light of the R right, the P polarization light of the G light, and the P polarization light of the B light are emitted in a color-synthesized manner from the dichroic prism 22 and enters as the P polarization light of the white light to the projection lens unit 23, and projected by the projection lens unit 23 under magnification as an image light, for example, on a screen.

In each of the incident side polarization plates 18R, 18G, and 18B, and each of the emission side polarization plate 21R, 21G and 21B, light that cannot pass the transmission axis of each of the polarization element layers is absorbed and converted into heat in each of the polarization plates containing the respective polarization element layers, increasing the temperature for each of them. The magnesium oxide substrate dissipates heat externally due to the heat dissipating characteristic (heat conductivity) thereof to suppress the temperature increase in the polarization element layer and the entire polarization plate. The cooling fan 27 supplies, through a flow channel 28 formed by a cooling duct (not illustrated) or the like, cooling air to the incident side polarization plates 18R, 18G, and 18B, the emission side polarization plates 21R, 21G, and 21B and the image display elements 19R, 19G, and 19B. The cooling air flows through the gap between each of the incident side polarization plates 18R, 18G, and 18B, each of the image display elements 19R, 19G, and 19B, and a gap between each of the emission side polarization plates 21R, 21G, and 21B, and each of the images display elements 19R, 19G, and 19B, so as to cool the incident side polarization plates 18R, 18G, and 18B, the emission side polarization plates 21R, 21G, and 21B, and the image display elements 19R, 19G, and 19B. In each of the incident side polarization plates 18R, 18G, and 18B, and each of the emission side polarization plates 21R, 21G, and 21B, heat is dissipated from each of the magnesium oxide substrates to the side of cooling air. Thus, the heat dissipating effect is enhanced by the flow of air.

While the example of Fig. 3 has a constitution in which the S polarization light is emitted as a result of polarization conversion from the polarization conversion element 5, this is not restrictive but a P polarization light may be emitted. In this case, the P polarization light for each of R, G, and B color light is transmitted through a corresponding one of the incident side polarization plates 18R, 18G, and 18B, directed to a corresponding one of the image display element 19R, 19G, and 19B, modulated in a corresponding one of the image display element 19R, 19G, and 19B based on the image signal during transmission, emitted as the S polarization light for each of R, G, and B color lights and subjected to color synthesis in the dichroic prism 22.

Further, while the example of Figs. 1 and 2 has a constitution in which one incident side polarization plate having a polarization element layer formed on one surface of the magnesium oxide substrate is located on the incident side of one image display element, and one emission side polarization plate having a polarization element layer on one surface of the magnesium oxide substrate is located on the emission side, this is not restrictive. Another constitution may be applicable in which, for example, one emission side polarization plate having respective polarization element layers on both sides of one magnesium oxide substrate is disposed on the emission side of the image display element. Alternatively, two emission side polarization plates each having a polarization element layer on one surface of the magnesium oxide substrate may be located on the emission side of the image display element.

According to the embodiment as has been described with reference to Figs. 1 to 3, since the magnesium oxide substrate has a cubic system structure in the polarization plate, it causes neither birefringence nor change of linear polarization to elliptic polarization. Accordingly, it causes less absorption and loss of light in the polarization element layer, enabling image display with bright and high contrast. Further, since the magnesium oxide substrate has a cubic system structure, it has no directionality also relative to the direction of the transmission axis (absorption axis) of the polarization element layer 18a or 21a and, accordingly, the operation of aligning the direction of the polarization to the transmission axis (absorption axis) of the polarization element layer is not necessary when the polarization plate is assembled. Further, since the magnesium oxide substrate per se can be manufactured easily, the manufacturing cost can also be reduced. Further, since the magnesium oxide substrate has good heat conductivity, heat generated in the polarization element layer or the polarization plate can be dissipated effectively, thereby suppressing the temperature increase of the polarization plate. Further, since the polarization plate has the protective layer 30, this can prevent the degradation of the optical members such as corrosion or clouding of the magnesium oxide substrate caused by the acid or the like, improving reliability and enhancing life. This enables an improvement in reliability, an increase in life, high quality image display and a reduction in cost also in the optical unit or the projection type image display apparatus.

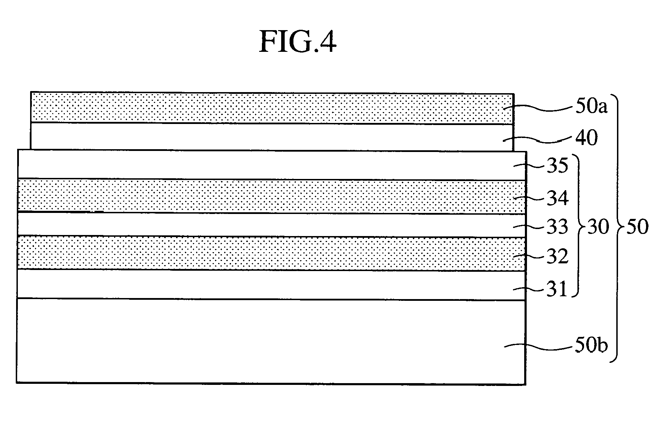

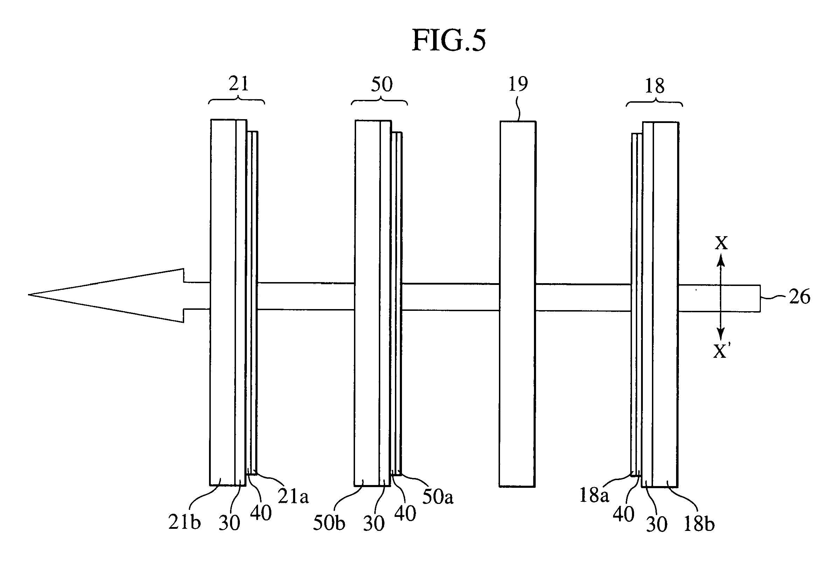

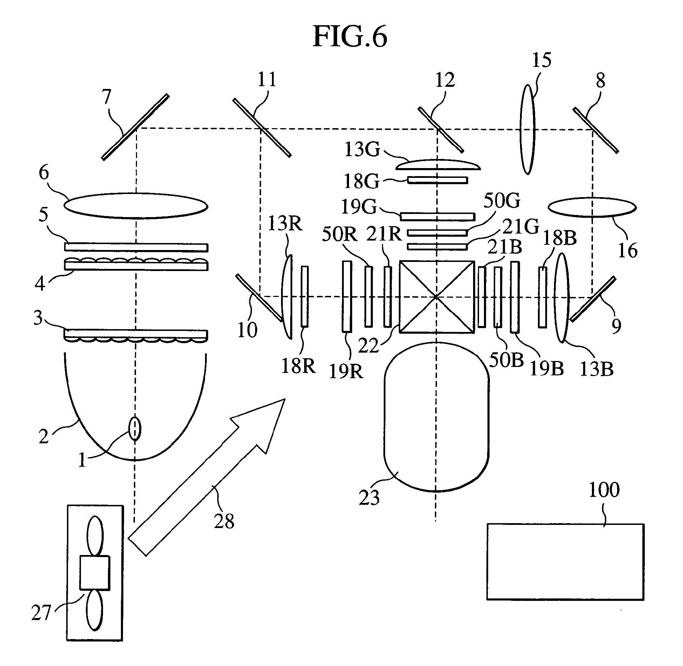

Figs. 4 to 6 are explanatory diagrams for a second embodiment. The second embodiment is an example in which the optical member is a polarization plate and a view angle compensation plate for compensating the phase difference of light. Fig. 4 is a diagram illustrating the cross sectional constitution of a view angle compensation plate by way of example. Fig. 5 is a diagram illustrating the arrangement of the view angle compensation plate of the constitution shown in Fig. 4 and the polarization plate of the constitution shown in Figs. 1 and 2 relative to the image display element by way of example. Fig. 6 is a diagram illustrating the constitution of the projection type image display element using the constitution of the arrangement shown in Fig. 5 by way of example.

In Fig. 4, are shown a view angle compensation plate 50, a magnesium oxide substrate 50b as a light permeable substrate of a cubic system structure, a protective layer 30 formed of an inorganic material, vapor deposition film layers 31 and 33 of aluminum oxide (aluminum oxide layers) forming the protective layer 30, and vapor deposition film layers 32 and 34 of magnesium fluoride (magnesium fluoride layer) also forming the protective layer 30. In addition, shown are an insulator layer 35 also as a portion of the protective layer 30, an adhesive layer 40 formed of an adhesive material such as acrylic acid ester, and an element layer 50a forming an element angle compensation element for executing a view angle compensation treatment of compensating the phase difference of incident light (hereinafter referred to as a view angle compensation element layer).

In the view angle compensation plate 50, the aluminum oxide layer 31, the magnesium fluoride layer 32, the aluminum oxide layer 33, and the magnesium fluoride layer 34 are formed respectively by vapor deposition above the magnesium oxide substrate 50b, an adhesive layer 40 is formed by way of the insulator layer 35, and the view angle compensation element layer 50a is fixed by way of the protective layer 30 by the pressure sensitive adhesive layer 40 to the magnesium oxide substrate 50. In the protective layer 30, the aluminum oxide layer 31 is provided to protect the magnesium oxide substrate 50b. The magnesium fluoride layers 32, 34 are disposed so as to prevent intrusion of the water content from the outside. The aluminum oxide layer 33 is provided to protect the magnesium fluoride layer 32. Further, the insulator layer 35 comprises, for example, silicon dioxide and this is provided to suppress the effect of the adhesive layer 40 on the magnesium fluoride layer 34 and to prevent water content from entering from the external side.

With the constitution of Fig. 4, even in a case where the view angle compensation plate 50 is used, for example, in a high-temperature and humidity circumstance and acid is generated in the adhesive layer 40 by hydrolysis reaction, intrusion of the acid to the magnesium oxide substrate 50b is prevented by the protective layer 30, particularly, by the magnesium fluoride layers 32 and 34 and, as a result, acid corrosion or clouding of the magnesium oxide substrate 50b can be prevented.

In the constitution of Fig. 4, while the protective layer 30 has a constitution comprising dual aluminum oxide layers 31 and 33 and dual magnesium fluoride layers 32 and 34, it may have a constitution comprising a single aluminum oxide layer 31 and a single magnesium fluoride layer 32, or comprising three or more aluminum oxide layers and three or more magnesium fluoride layers. Further, another constitution may be applicable in which the protective layer and the view angle compensation layer are provided on both sides of a light permeable substrate of a cubic system structure such as the magnesium oxide substrate 50b. Further, the number of aluminum oxide layers may be different from that of magnesium fluoride layers. Further, an inorganic material other than aluminum oxide and the magnesium fluoride may be used for the protective layer 30 so long as the inorganic material can provide a function and effect equal with or superior to those of aluminum oxide or magnesium fluoride. For example, a substitute for the aluminum oxide includes cerium fluoride. Further, also a light permeable substrate may be used instead of the magnesium oxide substrate 50b so long as the light permeable substrate has heat conductivity substantially equal with or superior to magnesium oxide and a cube system structure.

Fig. 5 is a diagram illustrating the arrangement of the view angle compensation plate of Fig. 4 and the polarization plate and the image display element of Figs. 1 and 2 by way of example. In Fig. 5, are shown an image display element 19 such as a liquid crystal panel, an incident side polarization plate 18 located on the light incident side of the image display element 19, an emission side polarization plate 21 located on the light emission side of the image display element 19, and a view angle compensation plate 50. The constitutional example of Fig. 4 is used for each of the incident side polarization plate 18, the emission side polarization plate 21 and the view angle compensation plate 50. That is, in the incident side polarization plate 18, are shown a polarization element layer 18a, a magnesium oxide substrate 18b as a light permeable substrate of a cubic system structure, a protective layer 30 formed of an aluminum oxide layer 31 (Fig. 1), a magnesium fluoride layer 32 (Fig. 2), an aluminum oxide layer 33 (Fig. 1), a magnesium fluoride layer 34 (Fig. 1), and an insulator layer 35 (Fig. 1), and an adhesive layer 40 for fixing the polarization element layer 18a by way of the protective layer 30 to the side of the magnesium oxide substrate 18b. In the emission side polarization plate 21, are shown a polarization element layer 21a, a magnesium oxide substrate 21b as a light permeable substrate of a cubic system structure, a protective layer 30, an adhesive layer 40 for fixing the polarization element layer 21a by way of the protective layer 30 to the side of the magnesium oxide substrate 21b. Further, in the view angle compensation plate 50, are shown a view angle compensation element layer 50a, a magnesium oxide substrate 50b as a light permeable substrate of a cubic system structure, a protective layer 30 formed of an aluminum oxide layer 31 (Fig. 4), a magnesium fluoride layer 32 (Fig. 4), an aluminum oxide layer 33 (Fig. 4), a magnesium fluoride layer 34 (Fig. 4), and an insulator layer 35 (Fig. 4), and an adhesive layer 40 for fixing a view angle compensation element layer 50a by way of the protective layer 30 to the side of the magnesium oxide substrate 50b. Reference numeral 26 denotes an incident polarization light of R light, G light, or B light which is a color light subjected to polarization conversion and color separation and X-X' denotes a polarization direction for the linear polarization of the incident polarization light 26. The incident side polarization plate 18, the emission side polarization plate 21, and the view angle compensation plate 50 are arranged such that the polarization element layers 18a and 21a, and the view angle compensation element layer 50a are located nearer the image display element 19 than the magnesium oxide substrate 18b, 21b and 50b, respectively. In addition, the view angle compensation plate 50 is located between the emission side polarization plate 21 and the emission side of the image display element 19. The polarization element layer 18a has a transmission axis in the X-X' direction, and the polarization element layer 21a has a transmission axis in the direction perpendicular to X-X' direction. Further, an air gap is formed between the incident side polarization plate 18 and the image display element 19, between the image display element 19 and the view angle compensation plate 50, and between the view angle compensation plate 50 and the emission side polarization plate 21 so as to be spaced apart each other.

The incident polarization light 26 of the P polarization light or S polarization light of a predetermined color light transmits through the magnesium oxide substrate 18b of the incident side polarization plate 18, the protective layer 30, and the adhesive layer 40 and is directed to the polarization element layer 18a. The polarization element layer 18a permits the component along the polarization direction of the polarization light which is parallel with the transmission axis of the polarization element layer 18a, that is, the components in the direction X-X' to transmit therethrough. The polarization light not transmitting the polarization element layer 18a is absorbed and converted into heat in the incident side polarization plate 18 including the polarization element layer 18a. The polarization light transmitting the polarization light layer 18a is directed to the image display element 19 and the directed polarization light is modulated in the image display element 19 in accordance with the gradation of the image signal. The modulated polarization light of the color light enters the view angle compensation element layer 50a of the view angle compensation plate 50. In the view angle compensation element layer 50a, a view angle compensation treatment is performed to compensate the phase difference of light. The polarization light transmitting through the view angle compensation element layer 50a transmits through the adhesive layer 40, the protective layer 30 and the magnesium oxide substrate 50b, and is then directed to the polarization element layer 21a of the next emission side polarization plate 21. Also the polarization element layer 21a permits the component along the polarization direction of the incident polarization light parallel with the transmission axis of the polarization element layer 21a, that is, the component in the direction perpendicular to the direction X-X' to transmit therethrough. The polarization light not transmitting the polarization element layer 21a is absorbed and converted into heat in the incident side polarization plate 21 including the polarization element layer 21a. The polarization light after passing through the polarization element layer 21a is further transmitted through the adhesive layer 40, the protective layer 30, and the magnesium oxide substrate 21b and then outputted to the optical system in the succeeding stage.

Since the magnesium oxide substrates 18b, 50b, 21b each have cubic system structure, they cause neither birefringence nor change of linear polarization to elliptic polarization. Accordingly, absorption and loss of light are small in the polarization light element layer 18a, 21a or the view angle compensation element layer 50a and bright and high contrast images can be obtained. Further, since the magnesium oxide substrates 18b, 50b, and 21b each have the cubic system structure as described above, there is no directionality to the direction of the transmission axis (absorption axis) of the polarization element layer 18a and 21a, and, accordingly, the operation for aligning the direction of the polarization element layers 18a and 21a to the transmission axis (absorption axis) is not necessary when the polarization plate is assembled. Further, also it is not necessary to align the direction of the view angle compensation plate 50b to that of the view angle compensation element layer 50a. Further, the magnesium oxide plates 18b, 50b, and 21b, due to their favorable heat conductivity, dissipate the heat in the inside of the incident polarization plate 18, the view angle compensation plate 50 and the emission polarization plate 21, respectively, thereby suppressing the temperature increase in each of them. Further, since the magnesium oxide substrate 18b, 21b, and 50b have cubic system structure, they can be manufactured more easily compared, for example, with the sapphire substrate, and reduce the cost. Further, since each of the incident side polarization plate 18, the emission side polarization plate 21, and the view angle compensation plate 50 is provided with the protective layer 30, even when acid is generated due to hydrolysis reaction in each of the adhesive layers 40, for example, at a high-temperature and humidity circumstance, intrusion of the acid to the magnesium oxide substrate 18b, 21b, and 50b can be inhibited, so that degradation of the optical member such as acid corrosion or clouding of the magnesium oxide substrate 18b, 21b, and 50b can be prevented. This can improve the reliability and increase the life of the optical member and enables image display with high picture quality.

In the constitution of Fig. 5, all or a portion of the incident side polarization plate 18, the emission side polarization plate 21, and the view angle compensation plate 50 may use a substrate other than the magnesium oxide substrate so long as the substrate is a light permeable substrate of cubic system structure, has heat conductivity substantially equal with or superior to that of magnesium oxide and can provide the function and effect equal with or superior to those of the magnesium oxide substrate. Further, one of the incident side polarization plate 18 and the emission side polarization plate 21 may have a constitution of not using the light permeable substrate of cubic system structure such as magnesium oxide.

Fig. 6 is a diagram illustrating the constitution of a projection type image display apparatus using the constitution of the arrangement of Fig. 5 by way of example. In Fig. 6, are shown view angle compensation plates 50R, 50G, 50B for R light, G light, and B light respectively. Other reference numerals are identical with those in the case of the first embodiment shown in Fig. 3. Each of the view angle compensation plates 50R, 50G, and 50B has a constitution within a range included in Fig. 4. Also in the constitution of Fig. 6, constitution elements including from the light source 1 to the projection lens unit 23 constitute an optical unit in the projection type image display apparatus.

In the constitution described above, the S polarization light of the R light directed to the incident side polarization plate 18R of the image display element 19R for the R light is aligned in polarization direction through the transmission of the component along the direction of the transmission axis of the incident side polarization plate 18R in the incident side polarization plate 18R and directed to the image display element 19R for the R light. In the image display element 19R, the S polarization light of the R light is modulated during transmission based on the image signal and emitted as light forming the optical image (optical image light) for the P polarization light of the R light. The P polarization light of the R light (optical image light) emitted from the image display element 19R is directed to the view angle compensation plate 50R, is compensated for the phase difference of light in the view angle compensation plate 50R, further directed to the emission side polarization plate 21R and aligned in polarization direction in the emission side polarization plate 21R by transmission of the component along the direction of the transmission axis of the emission side polarization plate 21R and is directed to the dichroic prism 22.

The S polarization light of the G light directed to the incident side polarization plate 18G of the image display element 19G for the G light is aligned in polarization direction by the transmission of the component along the direction of the transmission axis of the incident side polarization plate 18G in the incident side polarization plate 18G and directed to the image display element 19G for G light. In the image display element 19G, the S polarization light of the G light is modulated during transmission based on the image signal and emitted as a light forming the optical image (optical image light) for the P polarization light of the G light. The P polarization light of the G light (optical image light) emitted from the image display element 19G is directed to the view angle compensation plate 50G, is compensated for the phase difference of light in the view angle compensation plate 50G, further directed to the emission side polarization plate 21G and aligned in polarization direction in the emission side polarization plate 21G by transmission of the components along the direction of the transmission axis of the emission side polarization plate 21G and is directed to the dichroic prism 22.

Likewise, the S polarization light of the B light directed to the incident side polarization plate 18B of the image display element 19B for the B light is aligned in polarization direction by the transmission of the component along the direction of the transmission axis of the incident side polarization plate 18B in the incident side polarization plate 18B and directed to the image display element 19B for the B light. In the image display element 19B, the S polarization light of the B light is modulated during transmission based on the image signal and emitted as a light forming the optical image (optical image light) for the P polarization light of the B light. The P polarization light of the B light (optical image light) emitted from the image display element 19B is directed to the view angle compensation plate 50B, is compensated for the phase difference of light in the view angle compensation plate 50B, further directed to the emission side polarization plate 21B and aligned in polarization direction in the emission side polarization plate 21B by transmission of the component along the direction of the transmission axis of the emission side polarization plate 21B and is directed to the dichroic prism 22.

The functions of other portions in Fig. 6 are the same as those in the first embodiment shown in Fig. 3. Also in the constitutional example of Fig. 6, while the S polarization light is emitted from the polarization conversion element 5 as a result of polarization conversion, this is not restrictive but the P polarization light may be emitted. In this case, the P polarization light for each of the R, G, B color light transmits a corresponding one of the incident side polarization plate 18R, 18G, or 18B, directed to a corresponding one of the image display elements 19R, 19G, and 19B, modulated based on the image signal during transmission in a corresponding one of the image display elements 19R, 19G, and 19B, emitted as the S polarization light of each of R, G, B color light and subjected to color synthesis in the dichroic prism 22.

Further, also the constitutional example of Figs. 4 and 5 has a constitution in which one incident side polarization plate having a polarization element layer on one surface of the magnesium oxide substrate is located on the incident side of one image display element, and one emission side polarization plate having a polarization element layer on one surface of the magnesium oxide substrate is located on the emission side, this is not restrictive but the following constitution may be applicable: For example, one emission side polarization plate having a polarization element layer on both sides of one magnesium oxide substrate is located on the emission side of the image display element. Alternatively, two emission side polarization plates each having a polarization element layer on one surface of the magnesium oxide substrate may be located on the emission side of the liquid crystal panel.

According to the second embodiment described with reference to Figs. 4 to 6, since the magnesium oxide substrate has the cubic system structure, it causes neither birefringence nor change of the linear polarization to the elliptic polarization, and the absorption and loss of light is small, enabling bright and high contrast image display. Further, it is not necessary that the magnesium oxide substrate is adjustably aligned to the direction of the transmission axis (absorption axis) of the image display element layer or the view angle compensation element layer when the polarization plate or the view angle compensation plate is assembled. This improves the efficiency of the assembling operation. Further, since the magnesium oxide substrate itself can be manufactured easily, the manufacturing cost can be reduced. Further, since the magnesium oxide substrate has satisfactory heat conductivity, heat generated in the polarization plate or the optical member can be dissipated effectively, suppressing a temperature increase. Further, since the polarization plate has the protective layer 30, degradation of the material such as acid corrosion or clouding of the magnesium oxide substrate or the like can be prevented also under a high-temperature and humidity circumstance, etc., it is possible to improve reliability and enhance life. This enables an improvement in reliability, enhancement of life, image display with high quality and reduction in the cost in the optical unit or the projection type image display apparatus.

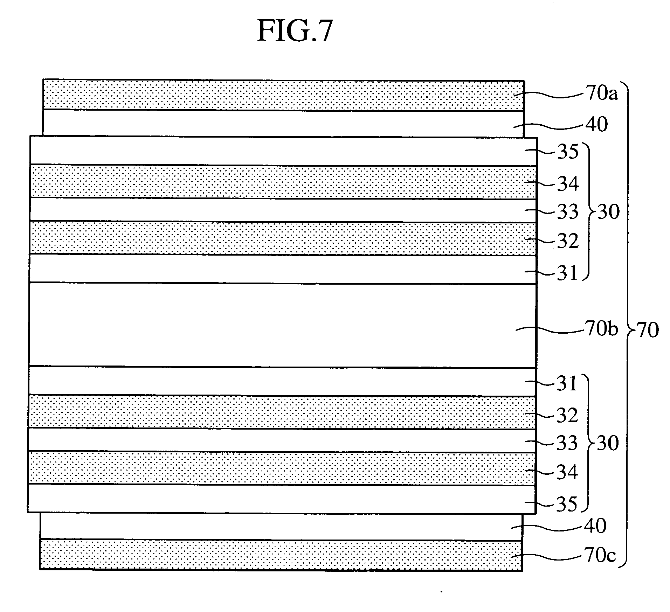

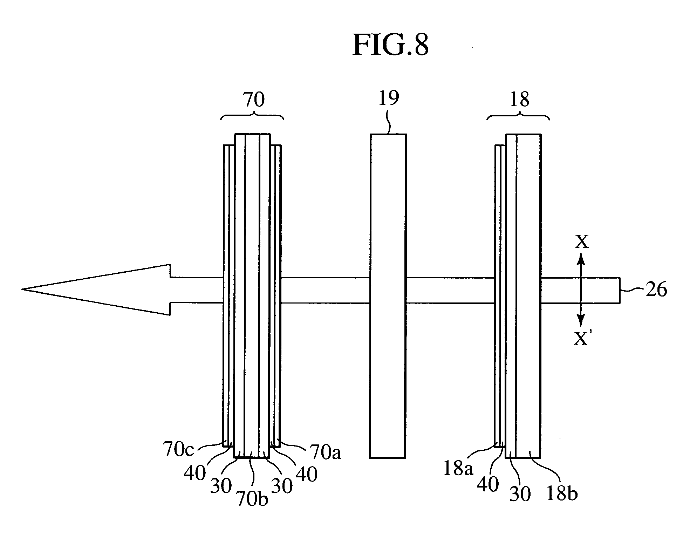

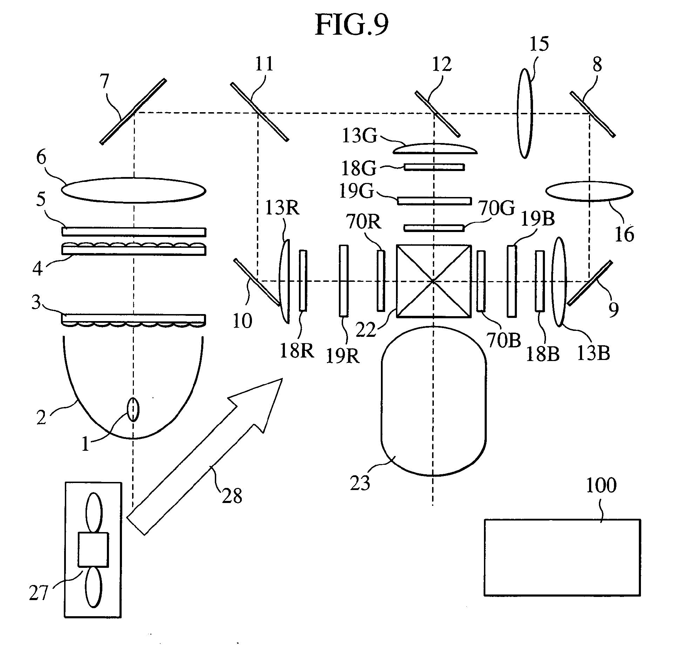

Figs. 7 to 9 are explanatory views for a third embodiment. The third embodiment is an example in which a polarization element layer is disposed on one surface of a substrate, and a view angle compensation element layer on the other surface as optical members, in which polarization treatment and view angle compensation treatment are performed in one member. Fig. 7 is a view for an example of the cross sectional constitution of the optical member, Fig. 8 is a view for an example of the arrangement of the optical member of the constitution shown in Fig. 7 and the polarization plate of the constitution shown in Fig. 1 relative to the image display element, and Fig. 9 is a view for an example of the constitution of a projection type image display apparatus using the constitution of the arrangement in Fig. 8.

In Fig. 7, are shown an optical member 70, a magnesium oxide substrate 70b as a light permeable substrate of cubic system structure, a protective layer 30 formed of an organic material, vapor deposition film layers 31 and 33 of aluminum oxide (aluminum oxide layer) forming the protective layer 30, vapor deposition film layers 32 and 34 of magnesium fluoride (magnesium fluoride layer) also forming the protective layer 30, an insulator layer 35 also as a portion of the protective layer 30, an adhesive layer 40 formed of an adhesive material comprising, for example, an acrylic acid ester, a polarization element layer 70a, and a view angle compensation element layer 70c.

The aluminum oxide layer 31, the magnesium fluoride layer 32, the aluminum oxide layer 33, and the magnesium fluoride layer 34 are formed respectively by vapor deposition on both surfaces of the magnesium oxide substrate 70b respectively and, further, the adhesive layer 40 is formed by way of the insulator layer 35. The polarization element layer 70a is fixed by the adhesive layer 40 on one surface, and the view angle compensation element layer 70c is fixed by the adhesive layer 40 on the other surface. In each of the protective layers 30 on both surfaces of the magnesium oxide substrate 70b, the aluminum oxide layer 31 is provided for protecting the magnesium oxide substrate 70b, the magnesium fluoride layers 32 and 34 are provided respectively for preventing intrusion of the water content from the outside, and the aluminum oxide layer 33 is provided for protecting the magnesium fluoride layer 32. Further, the insulator layer 35 comprises, for example, silicon dioxide and the layer is provided for suppressing the effect of adhesive layer 40 to the magnesium fluoride layer 34 and for preventing the water content from the outside.

In the constitution of Fig. 7, even in a case where the optical member 70 is used, for example, in a high temperature and high humidity circumstance and an acid is generated in the adhesive layer 40 by hydrolysis reaction, intrusion of the acid to the magnesium oxide substrate 70b is prevented by the protective layer 30, particularly, by the magnesium fluoride layers 32 and 34 on both surfaces of the magnesium oxide substrate 70b. As a result, corrosion or clouding of the magnesium oxide substrate 70b by the acid can be prevented.

In the constitution of Fig. 7, while each protective layer 30 on the magnesium oxide substrate 70b has a constitution comprising dual aluminum oxide layers 31 and 33 and dual magnesium fluoride layers 32 and 34, it may have a constitution comprising a single aluminum oxide layer 31 and a single magnesium fluoride layer 32, or comprising three or more aluminum oxide layers and three or more magnesium fluoride layers. Further, the number of aluminum oxide layers and the number of magnesium fluoride layers may be different from each other. Further, as the inorganic material used for the protective layer 30, those other than aluminum oxide or magnesium fluoride may also be used so long as they can provide function and effect equal to or superior to aluminum oxide or magnesium fluoride. For example, a substitute for the aluminum oxide includes cerium fluoride. Further, also for the magnesium oxide substrate 70b, those of light permeable substrates of cubic system structure may also be used instead of the magnesium oxide substrate 70b so long as they have a heat conductivity substantially equal to or superior to magnesium oxide.

Fig. 8 is a view for an example of the arrangement of the optical member of Fig. 7 and the polarization plate of the constitution shown in Fig. 1 relative to the image display element. In Fig. 8, are shown an image display element 19, an incident side polarization plate 18 located to the image display element 19 on the light incident side, and an optical member 70 located to the image display element 19 on the light emission side in which a polarization element layer and a view angle compensation element are formed by way of the protective layer 30 on a magnesium oxide substrate 70b. The incident side polarization plate 18 has a constitution within a range included in Fig. 1, and the optical member 70 of the constitution in Fig. 7 is used. Reference numeral 26 denotes an incident polarization plate of R light, G light, or B light which is color light subjected to polarization conversion and color separation. X-X' denotes a polarization direction for the linear polarization of the incident polarization light 26. In the incident side polarization plate 18, and the optical member 70, the polarization element layers 18a and 70a are located respectively to the magnesium oxide substrate 18b and 70b on the side of the image display element 19. The polarization element layer 18a has a transmission axis in the X-X' direction, and the polarization element layer 70a has a transmission axis in the direction perpendicular to the X-X' direction. Further, an air gap is formed between the incident side polarization plate 18 and the image display element 19 and between the image display element 19 and the optical member 70, respectively, for spacing them from each other.

In the constitution described above, the incident polarization light 26 of the P polarization light or S polarization light of predetermined color light transmits through the magnesium oxide substrate 18b of the incident side polarization plate 18, the protective layer 30, and the adhesive layer 40 and enters the polarization element layer 18a. The polarization element layer 18a permits the component along the polarization direction of the polarization light which is parallel with the transmission axis of the polarization element layer 18a among polarization light pieces, that is, the components in the direction X-X' to transmit therethrough. The polarization light not transmitting the polarization element layer 18a is absorbed and converted into heat in the incident side polarization plate 18 including the polarization element layer 18a. The polarization light having transmitted the polarization light layer 18a is irradiated to the image display element 19 and the irradiated polarization light is modulated in the image display element 19 in accordance with the gray-scale of the image signal. The modulated polarization light of the color light enters the view angle compensation element layer 70a of the view angle compensation plate 70. Also the polarization element layer 70a permits the component along the polarization direction of the incident polarization light parallel with the transmission axis of the polarization element layer 70a among polarization light pieces, that is, the component in the direction perpendicular to the direction X-X' to transmit therethrough. The polarization light not transmitting the polarization element layer 70a is absorbed and converted into heat in the optical member 70 including the polarization element layer 70a. The polarization light after passing through the polarization element layer 70a is further transmitted through the adhesive layer 40, the protective layer 30, and the magnesium oxide substrate 70b and further passes through the protective layer 30 and the adhesive layer 40 provided on the other surface of the oxide substrate 70b and enters the view angle compensation element layer 70c. The polarization light is subjected to view angle compensation treatment for compensating the phase difference of light in the view angle compensation element layer 70c, and emitted to the optical system in the succeeding stage.

Since the magnesium oxide substrates 18b and 70b have cubic system structure respectively, they cause neither birefringence nor change of linear polarization to elliptic polarization. Accordingly, absorption and loss of light are small in the polarization light element layer 18a and the optical member 70 and bright and high contrast images can be obtained. Further, since the magnesium oxide substrates 18b and 70b have the cubic system structure respectively as described above, there is no directionality to the direction of the transmission axis (absorption axis) of the polarization element layers 18a and 70a. Accordingly, the operation for aligning the direction to the transmission axis (absorption axis) of the polarization element layers 18a and 70a is not necessary upon assembling the polarization plate. Further, the operation for aligning the direction of the magnesium oxide substrate 70b relative to the view angle compensation element layer 70c is not required. Further, the magnesium oxide plates 18b and 70b, can suppress the temperature increase in the incident polarization plate 18 and the optical member 70 by heat dissipation due to their favorable heat conductivity. Further, the magnesium oxide substrate 18b and 70b can be manufactured more easily compared, for example, with the sapphire substrate and thereby the cost is reduced. Further, since each of the incident side polarization plate 18 and the optical member 70 is provided with the protective layer 30, even in a high temperature and high humidity circumstance, for instance, intrusion of the acid or the like to the magnesium oxide substrate 18b and 70b can be inhibited. As a result, degradation of the optical member such as corrosion or clouding of the magnesium oxide substrate 18b and 70b by the acid can be prevented. This can improve the reliability and increase the life as the optical member and enables image display with a high quality.

In the constitution of Fig. 8, for one or both of the incident side polarization plate 18 and optical member 70, substrates other than the magnesium oxide substrate can also be used so long as they are light permeable substrate of cubic system structure, have heat conductivity substantially equal to or superior to that of magnesium oxide and can provide the function and effect equal to or superior to those of the magnesium oxide substrate. Further, one of the incident side polarization plate 18 and the optical member 70 may have a constitution of not using the light permeable substrate of cubic system structure such as magnesium oxide.

Fig. 9 is a view for an example of the constitution of a projection type image display apparatus using the constitution of the arrangement of Fig. 8. In Fig. 9, are shown optical members 70R, 70G, 70B for R light, G light, and B light respectively. Other reference numerals are identical with those for constitution in Fig. 3 or Fig 6. Each of the optical members 70R, 70G, and 70B has a constitution within a range included in Fig. 7. Also in the constitution of Fig. 9, constitution elements from the light source 1 to the projection lens unit 23 constitute an optical unit in the projection type image display apparatus.

In the constitution described above, the S polarization light of the R light incident to the incident side polarization plate 18R of the image display element 19R for the R light is aligned for the polarization direction by the transmission of the component along the direction of the transmission axis of the incident side polarization plate 18R in the incident side polarization plate 18R and irradiated to the image display element 19R for the R light. In the image display element 19R, the S polarization light of the R light is modulated during transmission based on the image signal and emitted as light forming the optical image (optical image light) for the P polarization light of the R light. The P polarization light of the R light (optical image light) emitted from the image display element 19R enters the optical member 70R, is compensated for the phase difference of light in the optical member 70R, aligned for the polarization direction and is emitted to the dichroic prism 22.

Further, the S polarization light of the G light incident to the incident side polarization plate 18G of the image display element 19G for the G light is aligned for the polarization direction by the transmission of the component along the direction of the transmission axis of the incident side polarization plate 18G in the incident side polarization plate 18G and irradiated to the image display element 19G for the G light. In the image display element 19G, the S polarization light of the G light is modulated during transmission based on the image signal and emitted as light forming the optical image (optical image light) for the P polarization light of the G light. The P polarization light of the G light (optical image light) emitted from the image display element 19G enters the optical member 70G, is compensated for the phase difference of light in the optical member 70G, aligned for the polarization direction, and then emitted to the dichroic prism 22.

In the same manner, the S polarization light of the B light incident to the incident side polarization plate 18B of the image display element 19B for the B light is aligned for the polarization direction by the transmission of the component along the direction of the transmission axis of the incident side polarization plate 18B in the incident side polarization plate 18B and irradiated to the image display element 19B for the B light. In the image display element 19B, the S polarization light of the B light is modulated during transmission based on the image signal and emitted as light forming the optical image (optical image light) for the P polarization light of the B light. The P polarization light of the B light (optical image light) emitted from the image display element 19B enters the optical member 70B, is compensated for the phase difference of light, aligned for the polarization direction, and emitted to the dichroic prism 22.

The functions of other portions in Fig. 9 are identical with those in the constitutions shown in Fig. 3 and Fig 6. Also in the constitutional example of Fig. 9, while the S polarization light is emitted from the polarization conversion element 5 as a result of polarization conversion, the P polarization light may be emitted.

According to the third embodiment described with reference to Fig. 7 to Fig. 9, since the magnesium oxide substrate has the cubic system structure, and there is neither birefringence nor change of the linear polarization to the elliptic polarization, the absorption and loss of light is small to enable bright and high contrast image display. Further, adjustment for aligning the direction of the magnesium oxide substrate to the transmission axis (absorption axis) of the image display element layer or the view angle compensation element layer is not necessary upon assembling the polarization plate 18 or the optical member 70, and thereby the efficiency of the assembling operation is improved. Since the magnesium oxide substrate itself can be manufactured easily, the manufacturing cost can also be reduced. Further, since the magnesium oxide substrate has good heat conductivity, heat generated in the polarization plate or the optical member can be dissipated effectively to suppress temperature increase. Further, since the polarization plate has the protective layer 30, degradation of material such as corrosion or clouding of the magnesium oxide substrate caused by acid or the like can be prevented also under a high temperature and high humidity circumstance, etc., and thereby the reliability is improved and the life is enhanced. This enables improvement of the reliability, enhancement of life, image display with a high quality and reduction of the cost in the optical unit or the projection type image display apparatus. In particular, in the third embodiment, since the polarization element layer and the view angle compensation element layer are formed on one substrate as the optical member, the polarization treatment and the view angle compensation treatment can be performed with a small-sized and compact structure.

In each of the embodiments described above, while the optical member having the view angle compensation plate or the view angle compensation element layer is located to the image display element on the light emission side, it may also be located to the image display element on the light incident side, or may be located on both light incident light and light emission side. Further, while the description has been made to each of the embodiment that three image display elements are used for the projection type image display apparatus, it may adopt a constitution, for example, of using a single image display element.

## Claims

1. An optical element for use in a projection type image display apparatus, comprising:
a light permeable substrate of cubic system structure;
an optical element layer formed on the light permeable substrate;
an adhesive layer comprising an adhesive material to fix the element layer; and
a protective layer comprising an inorganic material and formed between the adhesive layer and the light permeable substrate.

2. The optical element according to claim 1,
wherein the protective layer has a lamination of a magnesium fluoride layer and an aluminum oxide layer.

3. The optical element according to claim 1,
wherein the light permeable substrate comprises magnesium oxide.

4. The optical element according to claim 1,
wherein the optical element layer comprises a polarization element layer through which light in a predetermined polarization direction transmits and a view angle compensation element layer to compensate a phase difference of light, and
wherein the polarization element layer is located on a surface of the light permeable substrate, and
the view angle compensation element layer is located on another surface of the light permeable substrate.

5. The optical element according to claim 1,
wherein the optical element layer is a polarization element layer through which light in a predetermined polarization direction transmits.

6. The optical element according to claim 1,
wherein the optical element layer is a view angle compensation element layer to compensate a phase difference of light.

7. An optical element comprising:
a light permeable substrate of cubic system structure;
a first protective layer formed on a surface of the light permeable substrate;
a first optical element layer; and
a first adhesive layer to fix the first optical element layer to the first protective layer.

8. The optical element according to claim 7,
wherein the protective layer has a lamination of a magnesium fluoride layer and an aluminum oxide layer.

9. The optical element according to claim 8,
wherein the aluminum oxide layer is formed on a surface of the light permeable substrate, and
the magnesium fluoride layer is formed on the aluminum oxide layer.

10. The optical element according to claim 7,
wherein the light permeable substrate comprises magnesium oxide.

11. The optical element according to claim 7, further comprising:
a second protective layer formed on another surface of the light permeable substrate;
a second optical element layer; and
a second adhesive layer to fix the second optical element layer to the second protective layer.

12. The optical element according to claim 11,
wherein the first optical element layer is a compensation element layer through which light in a predetermined polarization direction transmits, and
the second optical element layer is a view angle compensation element layer to compensate a phase difference of light.

13. A projection type image display apparatus, comprising:
a light source;
a color separator for splitting light from the light source into red, green, and blue color light;
an image display element for modulating the red, green and blue color light based on an image signal to form an optical image; and
an optical member formed at least on one of an incident side and an emission side of the image display element, comprising:
a light permeable substrate of cubic system structure;
a first protective layer formed on a surface of the light permeable substrate;
a first optical element layer; and
a first adhesive layer to fix the first optical element layer to the first protective layer;
a driving circuit to drive the image display element based on the image signal;
a color synthesizer to color-synthesize the optical images of the red, green, and blue color light formed by the image display element; and
a projection lens to project under magnification a color synthesized optical image.

14. The projection type image display apparatus according to claim 13,
wherein the protective layer has a lamination of a magnesium fluoride layer and an aluminum oxide layer.

15. The projection type image display apparatus according to claim 13,
wherein the aluminum oxide layer is formed on a surface of the light permeable substrate, and
the magnesium fluoride layer is formed on the aluminum oxide layer.

16. The projection type image display apparatus according to claim 13,
wherein the light permeable substrate comprises magnesium oxide.

17. The projection type image display apparatus according to claim 13, further comprising:
a second protective layer formed on another surface of the light permeable substrate;
a second optical element layer; and
a second adhesive layer to fix the second optical element layer to the second protective layer.

18. The projection type image display apparatus according to claim 17,
wherein the first optical element layer is a compensation element layer through which light in the predetermined polarization direction transmits, and
the second optical element layer is a view angle compensation element layer to compensate a phase difference of light.

19. The projection type image display apparatus according to claim 13,
wherein a predetermined polarization light aligned in the polarization direction of the light from a side of the light source is directed to the color separator, and the polarized and color separated light is directed to the optical member.
